# FASCICULE DE BREVET EUROPEEN

(11) **EP 3 910 888 B1**
(45) Date de publication et mention de la délivrance du brevet: **12.02.2025**
(21) Numéro de dépôt: 21172421.6
(22) Date de dépôt: 06.05.2021
(51) Int. Cl.: H04L 51/063, H04L 51/18

(54) **RENDU INTELLIGENT DE MESSAGE**
INTELLIGENTE WIEDERGABE EINER NACHRICHT
SMART MESSAGING

(30) Priorité: 12.05.2020 FR 2004638
(43) Date de publication de la demande: 17.11.2021
(73) Titulaire: Orange, 92130 Issy-les-Moulineaux (FR)
(72) Inventeur: GAILLET, Thierry, 92326 CHATILLON CEDEX (FR)
(74) Mandataire: Plasseraud IP

(56) Documents cités:
- US-A1- 2015 339 285
- US-A1- 2018 048 600

## Description

La présente invention concerne le domaine des messages écrits et vocaux transmis électroniquement via les réseaux de télécommunication et décodés au moyen des terminaux utilisateur. Par exemple, les courriers électroniques (e-mail en anglais) décodés au moyen d'un client de messagerie. Elle trouve notamment des applications dans la configuration des terminaux utilisateurs et plus précisément des décodeurs de messages (par exemple, les clients de messagerie dans le cas des messageries électroniques) pour adapter les messages à leur destinataire.

En effet, dans le cas de multiples destinataires, il est souvent nécessaire d'adapter un message à chacun des destinataires, par exemple, l'emploi de « Madame » ou « Monsieur », de « cher ami » ou « chère amie », de « vous » ou « tu ». Ces adaptations requièrent de rédiger autant de messages différents que de destinataires.

Ainsi, lorsque de très nombreux messages écrits et vocaux sont envoyés à de multiples destinataires, adapter chaque message envoyé aux différents destinataires est une tâche chronophage pour l'émetteur. De plus, il est difficile pour l'expéditeur de prévoir le contexte de réception par les destinataires des messages.

Des solutions connues pour l'envoi de messages vers de multiples destinataires existent. Celles-ci consistent à segmenter les messages selon des formes souhaitées en fonction des cibles et de contextes.

Ceci impose de multiples manipulations par l'expéditeur, de façon manuelle ou semi-automatisée.
Des modes de réalisation de l'état de l'art sont décrits dans les documents US2015/339285A1 et US2018/048600A1.

La présente invention vient améliorer la situation.

Un premier aspect de l'invention concerne un traitement par un terminal utilisateur d'un message reçu via un réseau de communication électronique au terminal utilisateur, la méthode comprend :
- une réception du message, ledit message comprenant:
   - des données correspondant à un contenu initial de message déterminé par l'expéditeur du message; et
   - au moins une donnée correspondant à une fonction, l'au moins une donnée étant déterminée par l'expéditeur du message;
- une détermination d'un contenu final, ledit contenu final comprenant :
   - le contenu initial de message déterminé par l'expéditeur du message; et
   - un contenu spécifique obtenu par détermination d'un résultat de la fonction appliquée sur au moins des données du terminal utilisateur.

Ainsi, le contenu des messages reçus est adapté sur le terminal utilisateur du destinataire, afin d'obtenir le contenu final du message. En effet, le message sur le terminal utilisateur du destinataire contient le contenu initial du message ainsi qu'une partie qui est déterminée à partir de la fonction en l'appliquant sur des données du terminal utilisateur. La détermination par l'expéditeur du contenu du message à envoyer est simplifiée. En effet, certaines parties du message sont remplacées par une donnée correspondant à une fonction, par exemple une balise HTML ou encore une simple chaine de caractères liée à une fonction. L'expéditeur en introduisant une telle donnée détermine un contenu générique, par exemple un contenu générique représentant une salutation. Ce contenu générique n'est pas propre à un destinataire. Lorsque le message est reçu par un destinataire du message, le message est traité par le terminal utilisateur de façon à être décodé. Lors de ce traitement, la donnée correspondant à la fonction est remplacée par un contenu propre au destinataire (appelé contenu spécifique), par exemple une salutation générique est remplacée par un « Bonsoir » ou un « Bonjour ». Ce contenu propre au destinataire est obtenu par le terminal du destinataire par détermination d'un résultat de la fonction appliquée sur au moins des données du terminal utilisateur, par exemple, en fonction de données représentatives du moment de réception du message par le terminal utilisateur. Ainsi, si le message est envoyé à deux destinataires avec des fuseaux horaires différents, l'expéditeur n'a pas à distinguer le message pour chacun des destinataires en indiquant « Bonjour » pour l'un et « Bonsoir » pour l'autre, le terminal utilisateur de chacun des destinataires adaptera le message reçu aux données du terminal utilisateur. L'expéditeur peut ainsi déterminer le contenu d'un unique message destiné à plusieurs destinataires différents, le message comprenant le contenu initial ainsi que le contenu spécifique. Le message est alors adapté par le terminal utilisateur de chaque destinataire en fonction de données de leur terminal utilisateur. Le message lu ou écouté par un destinataire est alors adapté comme si le message avait été déterminé pour ce seul destinataire.

Par décodage, il est entendu la détermination par le terminal utilisateur du contenu (par exemple le contenu final) d'un message au moyen de données et notamment la donnée correspondant à la fonction. Une fois le décodage réalisé, le terminal utilisateur peut restituer ce contenu, par exemple sur un écran du terminal utilisateur ou encore via un appareil destiné à produire des sons (haut-parleur, écouteur...).

Par un terminal utilisateur, il est entendu un appareil permettant à un utilisateur de recevoir des données via un réseau de communication électronique. Autrement dit, le terminal utilisateur est un point d'accès permettant de se connecter à un réseau de communication filaire ou radio et permettant de recevoir et décoder les messages reçus via ce réseau. Le terminal utilisateur est celui d'un destinataire du message.

Par donnée correspondant à une fonction, il est entendu une donnée qui définit une fonction qui a pour entrée au moins une donnée du terminal utilisateur. La fonction peut définir les données du terminal utilisateur considérées comme des entrées de la fonction. La détermination ou décodage de la donnée correspondant à la fonction s'entend comme le résultat du calcul de la fonction appliquée sur les données du terminal utilisateur considérées comme des entrées.

Pour obtenir le contenu résultant du décodage de la donnée correspondant à la fonction, la prise en compte d'autres données peut être nécessaire, à savoir, que la fonction peut être appliquée à d'autres données en plus des données du terminal utilisateur, par exemple, les données correspondant au contenu initial de message déterminé par l'expéditeur du message ou encore la prise en compte des données du terminal utilisateur.

Par message, il est entendu un message vocal ou un message visuel (écrit, dessin).

Par contenu initial, il est entendu le contenu d'un message déterminé par l'expéditeur. Ladite au moins une donnée correspondant à une fonction vient compléter le contenu du message déterminé par l'utilisateur. Le contenu spécifique du contenu final est déterminé à partir de cette au moins une donnée correspondant à une fonction.

Par contenu final, il est entendu le contenu d'un message décodé et pouvant être restitué par le terminal utilisateur au destinataire. Le contenu final d'un même message décodé par deux terminaux utilisateur différents peut différer.

Par données du terminal utilisateur, il est entendu des données présentes sur le terminal utilisateur indépendamment de la réception du message. Par exemple, les données du terminal utilisateur peuvent être relatives au destinataire utilisant le terminal utilisateur ou au terminal utilisateur.

Selon un mode de réalisation, il prévu la réception par un autre terminal utilisateur du message, dans laquelle un contenu obtenu par détermination d'un résultat de la fonction appliquée sur des données de l'autre terminal utilisateur diffère du contenu spécifique.

Ainsi, le résultat du décodage du message par le terminal utilisateur diffère du résultat du décodage du message par l'autre terminal utilisateur, puisque le contenu obtenu par détermination du résultat de la fonction appliquée sur les données du terminal utilisateur diffère du contenu obtenu par détermination du résultat de la fonction appliquée sur les données de l'autre terminal utilisateur.

Selon un mode de réalisation, le message est un courriel (ou message électronique) et l'au moins une correspondant à une fonction déterminée par l'expéditeur est une balise.

Ainsi, l'invention s'applique dans le cas des messages électroniques, où les données correspondant à des fonctions sont des balises, par exemple, des balises « HyperText Markup Language », HTML, ou des balises MarkDown. Ces balises peuvent être déterminées par l'expéditeur sans nécessiter d'outils informatiques particuliers. Cela simplifie alors la mise en oeuvre de l'invention.

Selon un mode de réalisation, le contenu spécifique est obtenu en en outre par détermination du résultat de la fonction appliquée sur des données correspondant au contenu initial de message déterminé par l'expéditeur du message.

Le contenu obtenu par décodage de la donnée correspondant à la fonction est obtenu par détermination du résultat de la fonction appliquée non seulement sur les données du terminal utilisateur, mais également sur les données correspondant au contenu initial de message déterminé par l'expéditeur du message. Par exemple, lorsque la donnée correspondant à la fonction fait référence ou pointe une partie ou l'intégralité du contenu initial de message déterminé par l'expéditeur du message, il est possible de décoder de manière spécifique les données correspondant à cette partie ou à l'intégralité du contenu initial. Par exemple, décoder les données correspondant au contenu initial de message déterminé par l'expéditeur du message afin d'obtenir la partie ou l'intégralité du contenu initial de message dans une langue adaptée à chaque destinataire.

Cela permet d'adapter le contenu initial de message déterminé par l'expéditeur du message à des données du terminal utilisateur, c'est-à-dire à des données propres à l'utilisateur, et notamment à des paramètres déterminés par l'utilisateur.

Le contenu initial de message déterminé par l'expéditeur du message peut correspondre, au moins en partie, avec le contenu obtenu par détermination d'un résultat de la fonction appliquée sur les données du terminal utilisateur.

Selon un mode de réalisation, les données du terminal sont des paramètres propres à un utilisateur et/ou des messages précédemment reçus par le terminal utilisateur et/ou une heure locale de la réception du message par le terminal utilisateur et/ou un état du terminal utilisateur.

Par utilisateur, il est entendu l'utilisateur du terminal utilisateur, qui peut être le destinataire du message envoyé par l'expéditeur.

Par exemple, les données du terminal peuvent être :
- des données d'un carnet d'adresses (à savoir, des paramètres propres à un utilisateur), cela permet d'adapter le message afin que le contenu final de celui-ci prenne en compte des informations du carnet d'adresses (par exemple, si seuls des numéros de téléphone professionnels sont renseignés alors les formules de politesse d'introduction ou de conclusion peuvent être adaptées à des échanges de mails professionnels, inversement si des numéros de téléphone privés sont renseignés alors les formules de politesse d'introduction ou de conclusion peuvent être adaptées à des échanges de mails privés) ;
- des données de disponibilité utilisateur (à savoir, des paramètres propres à un utilisateur et/ou un état du terminal utilisateur) ;
- des données d'un historique de messages (à savoir, des paramètres propres à un utilisateur), cela permet par exemple de déterminer comment le destinataire s'adressait à l'expéditeur dans des messages précédents et ainsi de déduire les formules de politesse d'introduction ou de conclusion;
- des données d'une horloge, cela permet d'adapter le message afin que le contenu final de celui-ci prenne en compte le moment de réception (par exemple, « bonsoir » ou « bonjour »);
- des données d'un calendrier, cela permet d'adapter le message afin que le contenu final de celui-ci prenne en compte le jour de réception (par exemple, « bon week-end » ou « bonnes vacances »);
- des données d'un profil utilisateur (à savoir, des paramètres propres à un utilisateur), cela permet d'adapter le message afin que le contenu final de celui-ci prenne en compte le profil de l'utilisateur (par exemple, en intégrant le nom du destinataire dans le contenu final);
   et
- des données de paramétrage du terminal utilisateur, cela permet d'adapter le message afin que le contenu final de celui-ci prenne en compte le paramétrage du terminal utilisateur (par exemple, que le contenu final soit dans la langue paramétrée) ;
- des données de localisation, cela permet notamment d'adapter le message afin que le contenu final de celui-ci prenne en compte le moment de réception relativement au fuseau horaire dans lequel se trouve le terminal utilisateur (par exemple, « bonsoir » ou « bonjour »);
- des données relatives à l'état du terminal utilisateur, par exemple lorsque le terminal est en mode veille ou en mode actif.

Selon un mode de réalisation, il est prévu la détermination d'un message à émettre comprenant :
- la détermination d'un contenu de message par un utilisateur du terminal utilisateur ;
- la détermination d'un contenu remplaçant le contenu spécifique.

Ainsi, lorsqu'il est répondu au message ou que celui-ci est transféré à un nouveau destinataire, notamment dans le cadre de message électronique, il n'est pas possible au nouveau destinataire ou à l'ancien expéditeur de déduire ou de déterminer le contenu obtenu par détermination du résultat de la fonction appliquée sur les données du terminal utilisateur. Ainsi, les données du terminal utilisateur restent confidentielles.

Selon un mode de réalisation, il est prévu l'émission par le terminal utilisateur du message à émettre, ledit message à émettre comprenant :
- des données correspondant au contenu de message déterminé par l'utilisateur du terminal utilisateur ;
- des données correspondant au contenu de remplacement ;
- les données correspondant au contenu initial de message déterminé par l'expéditeur du message.

Selon un mode de réalisation, il est prévu une évaluation du contenu spécifique obtenu.

Ainsi, il est possible de prévoir une étape d'évaluation mise en oeuvre par le terminal utilisateur dans laquelle l'utilisateur du terminal utilisateur (à savoir un destinataire du message) évalue le contenu spécifique obtenu par détermination du résultat de la fonction. Cela permet d'adapter et/ou d'améliorer le décodage. En effet, bien que celui-ci soit réalisé en fonction des données du terminal utilisateur, le contenu spécifique obtenu peut ne pas correspondre à ce que l'expéditeur aurait individuellement envoyé au destinataire ou encore ce que le destinataire souhaite recevoir. Par évaluation, il est entendu ici toutes méthodes permettant au destinataire de noter ou de valider (ou non) le contenu spécifique obtenu par détermination du résultat de la fonction.. Il peut être avantageux de proposer au destinataire de choisir parmi des alternatives dans le cas où celui-ci ne validerait pas le contenu spécifique à évaluer ou encore de demander au destinataire de proposer lui-même une alternative qui sera prise en compte dans les prochains décodages des données, c'est-à-dire que le contenu obtenu par détermination du résultat de la fonction appliquée sur au moins des données du terminal utilisateur est obtenu par détermination du résultat de la fonction appliquée sur:
- les données du terminal utilisateur ; et sur
- des données relatives à l'évaluation faite par le destinataire et/ou à l'alternative choisie ou proposée par le destinataire.

Selon un autre aspect, il est proposé un programme informatique comportant des instructions pour la mise en oeuvre de tout ou partie d'un procédé tel que défini dans les présentes lorsque ces instructions sont exécutées par un processeur. Selon un autre aspect de l'invention, il est proposé un support d'enregistrement non transitoire, lisible par un ordinateur, sur lequel est enregistré un tel programme.

Selon un autre aspect, il est proposé un terminal utilisateur configuré pour traiter un message reçu via un réseau de communication électronique, le terminal utilisateur comprend :
une interface réseau configurée pour recevoir et envoyer des messages via le réseau de communication électronique ;
un processeur ; et
une mémoire stockant des instructions, de sorte que lorsque ces instructions sont exécutées par le processeur, elles configurent le terminal utilisateur pour:
   - recevoir par l'interface réseau le message comprenant:
      - des données correspondant à un contenu initial de message déterminé par l'expéditeur du message; et
      - au moins une donnée correspondant à une fonction, l'au moins une donnée étant déterminée par l'expéditeur du message;
   - déterminer un contenu final, ledit contenu final comprenant :
      - le contenu initial de message déterminé par l'expéditeur du message; et
      - un contenu obtenu par détermination d'un résultat de la fonction appliquée sur au moins des données du terminal utilisateur.

D'autres caractéristiques, détails et avantages de l'invention apparaîtront à la lecture de la description détaillée ci-après, et à l'analyse des dessins annexés, sur lesquels :
[Fig. 1] illustre la réception et la restitution d'un message selon un mode de réalisation de l'invention ;
[Fig. 2] illustre un ordinogramme représentant le procédé selon l'invention.

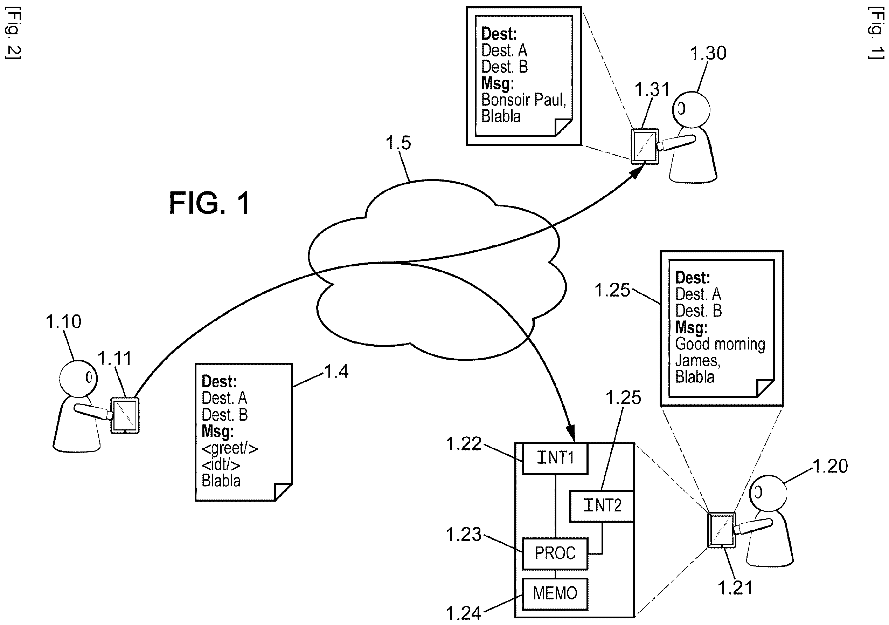

Dans l'exemple de la figure 1 un expéditeur 1.10 envoie un message 1.4 via un réseau de communication électronique 1.5 (par exemple, le réseau internet ou un réseau intranet) à plusieurs destinataires 1.20 (destinataire A) et 1.30 (destinataire B). Le message 1.4 est envoyé au moyen d'un terminal utilisateur 1.11 et reçu au moyen des terminaux utilisateur 1.21 et 1.31. Ces terminaux utilisateur 1.11, 1.21 et 1.31, peuvent être par exemple des ordinateurs, smartphones ou encore des tablettes numériques. Dans cet exemple, il n'est représenté que deux destinataires A 1.20 et B 1.30, toutefois l'invention peut être appliquée sans limites particulières. Le message 1.4 envoyé est un message de messagerie électronique également appelé courrier électronique, courriel ou encore email. L'invention peut être appliquée avec d'autres types de messages, notamment des messages vocaux.

Le message comprend des données correspondant à un contenu initial de message déterminé par l'expéditeur du message, à savoir la chaine de caractère « Blabla ». Le message comprend également des données correspondant à des fonctions, ces données étant également déterminées par l'expéditeur qui sont ici <greet/> et <idt/>. Dans le cas décrit à la figure 1, les données correspondant à des fonctions sont des balises HTML et le contenu initial déterminé par l'expéditeur est un texte.

Dans d'autres modes de réalisation non représentés, les données correspondant aux fonctions peuvent également être du texte, c'est-à-dire des chaines de caractères déterminées par l'expéditeur représentatives des fonctions (ou au moins liées à ces fonctions), par exemple, « Bonjour » à la place de <greet/>, « Jean » à la place de <idt/>. Dans le cas où le message est un message vocal, les données correspondent à un enregistrement sonore et les données correspondant à des fonctions peuvent être, par exemple, des données représentant une touche du clavier d'ordinateur ou encore du smartphone.

Le terminal utilisateur 1.21 est plus amplement détaillé et comprend un module d'interface avec le réseau de communication électronique (INT1) 1.22, un processeur (PROC) 1.23, une mémoire (MEMO) 1.24 et un module d'interface utilisateur (INT2) 1.25.

La mémoire 1.24 comprend une mémoire non volatile sur laquelle est stocké le programme informatique et une mémoire volatile sur laquelle sont stockés les paramètres pour la mise en oeuvre de l'invention, par exemple le message reçu (à savoir, les données correspondant au contenu initial et la donnée correspondant à une fonction), les données du terminal utilisateur par exemple des données d'un carnet d'adresses (par exemple, les données correspondant à une adresse privée ou professionnelle), des données de disponibilité utilisateur (par exemple, des données relatif à l'agenda), des données d'un historique de message (par exemple, des données relatives à la réception d'un message, des réponses à ce message ou encore des transferts de ce message), des données d'une horloge, des données d'un calendrier, des données d'un profil utilisateur (par exemple, des données relatives à la langue de l'utilisateur), des données de paramétrage du terminal utilisateur (par exemple, des données relatives à un mode du terminal ou encore à un type de connectivité), des données relatives à l'état du terminal utilisateur (par exemple, des données relatives au mode du terminal utilisateur, mode veille, mode actif), des données de localisation (par exemple, des données GPS) ou encore des données d'évaluation (par exemple, des correspondances entre la donnée correspondant à une fonction et des notes, des invalidations, des alternatives choisies ou encore des mots attribués par le destinataire).

Le module d'interface avec le réseau de communication électronique (INT1) 1.22 permet au terminal utilisateur 1.21 de recevoir le message 1.4 via le réseau de communication électronique 1.5. Il peut s'agir d'un modem internet et/ou d'une carte réseau pour un ordinateur ou encore d'un module de communication sans fil permettant de recevoir et de décoder un signal radio provenant d'une antenne du réseau de communication électronique 1.5.

Le module d'interface utilisateur 1.25 permet notamment la restitution du message 1.4 à l'utilisateur 1.20 du terminal utilisateur 1.21. Le module d'interface utilisateur 1.25 permet également à l'utilisateur 1.20 de déterminer un contenu de message à émettre et d'évaluer le contenu spécifique, par exemple, en donnant une note ou en validant le contenu spécifique ou encore en choisissant des alternatives au contenu spécifique ou en attribuant directement une alternative au contenu spécifique. Le module d'interface utilisateur 1.25 permet également à l'utilisateur 1.20 de déterminer certaines données stockées sur le terminal utilisateur 1.21, par exemple, les données d'un carnet d'adresses, les données d'un profil utilisateur ou encore les données de paramétrage du terminal utilisateur. Le module d'interface utilisateur 1.25 peut comprendre un écran et un clavier pour un ordinateur ou un écran tactile pour un smartphone. Le module d'interface utilisateur 1.25 peut également comprendre un microphone et un haut-parleur dans le cas où le message 1.4 est un message vocal.

Le processeur 1.23 est notamment configuré pour contrôler le module d'interface avec le réseau de communication électronique (INT1) 1.22 afin de pouvoir recevoir le message 1.4 via le réseau 1.5 et éventuellement d'émettre un message également via le réseau 1.5. Le processeur 1.23 est également configuré pour déterminer le contenu final du message, c'est-à-dire le contenu du message tel qu'il sera restitué à l'utilisateur. Le processeur 1.23 détermine ce contenu final comme il est d'usage concernant le contenu initial de message déterminé par l'expéditeur du message. Le processeur 1.23 détermine le contenu spécifique par détermination du résultat de la fonction appliquée sur au moins des données du terminal utilisateur, par exemple, celles stockées sur la mémoire 1.24.

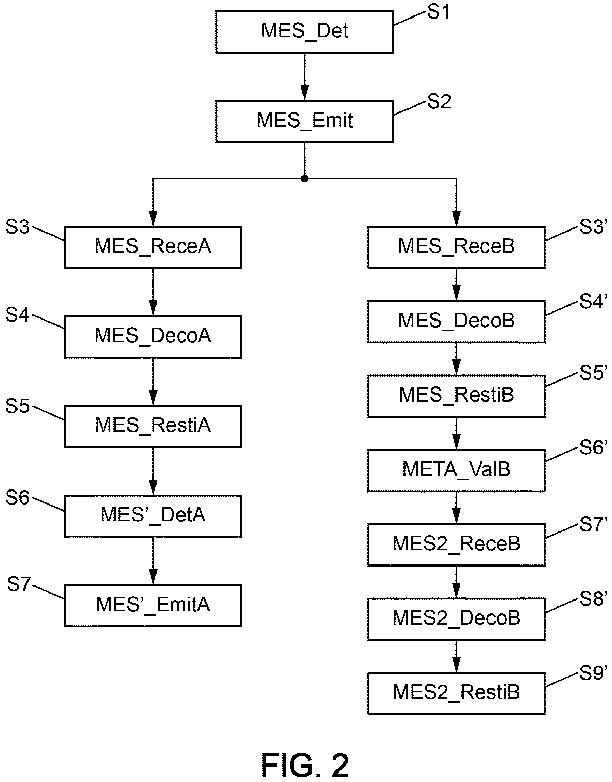

La figure 2 représente un organigramme d'un procédé selon un mode de réalisation de l'invention.

A l'étape S1, l'expéditeur 1.10 prépare un message à destination des destinataires A 1.20 et B 1.31. Pour cela, l'expéditeur 1.10 détermine notamment le contenu initial de message. Par exemple, l'expéditeur détermine le texte du courrier électronique 1.4 (ici, « blabla ») ou encore l'enregistrement audio du message vocal 1.4. L'expéditeur 1.10 détermine également au moins une donnée correspondant à une fonction. Dans l'exemple de la figure 1, c'est-à-dire dans le cas où le message est un message électronique, l'expéditeur a déterminé des données correspondant à deux fonctions, qui sont des balises HTML, à savoir <greet/> et <idt/>. Celles-ci peuvent être déterminées directement dans le texte du message 1.4, à savoir que l'expéditeur peut écrire les chaines de caractères « *<greet*/*>* » et « <*idt*/> » dans le corps du texte. Il est également possible d'utiliser un logiciel configuré pour proposer les balises à l'expéditeur afin de simplifier la détermination des données correspondant aux fonctions. D'autres données correspondant à des fonctions seront décrites par la suite. Lorsque les données correspondant aux fonctions sont des chaines de caractères représentatives de fonctions, alors l'expéditeur détermine la chaine de caractère, par exemple, « Bonjour » qui correspond à la même fonction que la balise <greet/> et « Jean » qui correspond à la même fonction que la balise <idt/>.

Lorsque le message 1.4 est un message vocal, l'expéditeur peut, par exemple, déterminer la donnée correspondant à une fonction au moyen de touche d'un clavier pour un téléphone, smartphone ou encore un ordinateur. Par exemple, les touches du clavier numérique peuvent chacune correspondre à une donnée correspondant à une fonction différentes, la touche « 1 » peut, par exemple, correspondre à une balise de type <idt/> (dont le décodage par le terminal utilisateur 1.20 ou 1.30 du destinataire restitue le nom du destinataire). L'expéditeur pendant l'enregistrement du message vocal peut alors appuyer sur la touche « 1 » ce qui introduira un signal sonore ou numérique caractéristique <idt/> dans le message vocal.

A l'étape S2, l'expéditeur 1.10 envoie un message 1.4 via le réseau de communication électronique 1.5 (dans l'exemple de la figure 1 il s'agit du réseau internet) à plusieurs destinataires 1.2 et 1.3.

Aux étapes S3 et S3', les terminaux utilisateur 1.21 et 1.31 reçoivent via leur module d'interface avec le réseau de communication électronique respectif (seul INT1 1.22 est représenté sur la figure 1) le message 1.4. Les terminaux utilisateur 1.21 et 1.31 peuvent envoyer via leur module d'interface avec le réseau de communication électronique des messages d'accusé réception au terminal utilisateur 1.11. Ces messages peuvent contenir les contenus finaux tels que déterminés par chacun des terminaux utilisateur 1.21 et 1.31 (détermination qui est décrite dans les étapes suivantes), par exemple, suite à l'accord donné par chacun des destinataires 1.30 et 1.20 pour transmettre les contenus finaux. En l'absence d'accord ou plus généralement d'une autorisation les messages d'accusé réception ne comporteront pas les contenus finaux tels que déterminés par chacun des terminaux utilisateur 1.21 et 1.31.

Aux étapes S4 et S4', les processeurs des terminaux utilisateur 1.21 et 1.31 (seul PROC 1.23 est représenté sur la figure 1) déterminent les contenus finaux du message. Ainsi, les processeurs décodent les données correspondant au contenu initial de message déterminé par l'expéditeur 1.10 à l'étape S1, à savoir, qu'ils décodent des données codant le texte « Blabla » dans l'exemple de la figure 1. De plus, les processeurs décodent les données correspondant aux fonctions déterminées par l'expéditeur 1.10 à l'étape S1, à savoir, les balises <greet/> et <idt/> dans l'exemple, ou encore « Bonjour » et « Jean » dans une alternative. Ce décodage des données correspondant à des fonctions se fait en fonction des données de chaque terminal utilisateur. Ce décodage, par le processeur 1.23 du terminal utilisateur 1.21, des données correspondant aux fonctions se fait en fonction des données stockées sur la mémoire 1.24 de ce même terminal utilisateur 1.21. Le décodage effectué par les processeurs des terminaux utilisateur 1.21 et 1.31 peut être effectué à différents moments après la réception du message. Par exemple, il peut être mis en oeuvre au moment de la réception du message par chaque terminaux utilisateur 1.21 et 1.31 mais également au moment de l'ouverture et de la restitution du message à chaque destinataire.

Plus précisément, le processeur 1.21 calcule les résultats (également appelé contenu spécifique) des fonctions correspondant aux données du message 1.4 appliquées sur les données du terminal utilisateur 1.21. Ainsi, la balise « <idt/>», ou encore la chaine de caractère « Jean », détermine une fonction qui, à des données du profil utilisateur (stockées dans la mémoire 1.24) du destinataire 1.20, renvoie le nom du destinataire 1.20. La balise « <greet/> », ou encore la chaine de caractère « Bonjour », détermine une fonction qui, à des données de l'horloge du terminal utilisateur 1.21 et/ou à des données de localisation (ou encore de fuseau horaire), renvoie une formule de politesse d'introduction qui dépend du moment de réception du message 1.4, par exemple « Bonjour » ou « Bonsoir ». D'autres données correspondant à des fonctions peuvent être déterminées, par exemple :
- « < greet/> », ou encore la chaine de caractère « Bonjour », peut également déterminer une fonction qui, à des données du carnet d'adresses du destinataire 1.20 stockées sur la mémoire 1.24, renvoie une formule de politesse d'introduction qui dépend du niveau de familiarité entre l'expéditeur 1.10 et le destinataire 1.20. Par exemple, si seuls des numéros de téléphone professionnels de l'expéditeur 1.10 sont renseignés alors le résultat du décodage de « < greet/> » par le processeur 1.23 pourra être « Monsieur » ou « Madame ». A l'inverse, si des numéros de téléphone privés de l'expéditeur 1.10 sont renseignés alors le résultat du décodage de « < greet/> » par le processeur 1.23 pourra être « Bonjour », « Bonsoir » ou encore « Salut ». Le résultat de la fonction associée à « < greet/> » peut également dépendre des données de l'historique de messages stockées sur la mémoire 1.24, permettant également de déterminer un niveau de familiarité entre l'expéditeur 1.10 et le destinataire 1.20 sur la base de précédents messages.
- « < bye/ > » , ou encore la chaine de caractère « Bonne journée », détermine une fonction qui, à des données du terminal 1.21 stockées sur la mémoire 1.24, renvoie une formule de politesse de conclusion, par exemple « Bonne journée », « Bonne soirée », « Bon weekend », « Salutation distinguée ». Les données du terminal utilisateur 1.21 concernées par cette fonction sont les mêmes que dans le cas de « < greet/> ». Le résultat de la fonction associée à « < bye/ > » peut également dépendre de données du calendrier stockées sur la mémoire 1.24, par exemple, « Bon week-end ».
- « <proximity/> », ou encore la chaine de caractère « Tu », détermine une fonction qui, à des données du terminal 1.21 stockées sur la mémoire 1.24, renvoie un pronom personnel familier ou soutenu, par exemple, « vous » ou « tu ». Les données du terminal utilisateur 1.21 concernées par cette fonction peuvent être les données du carnet d'adresses du destinataire 1.20 comme dans le cas de « < greet/> ».
- « <availability/> » détermine une fonction qui, à des données de disponibilité utilisateur stockées sur la mémoire 1.24, renvoie un préambule pour présenter ses excuses à un éventuel dérangement et proposer un extrait du message ou éventuellement inviter à lire plus tard.- « <translate> » et « </translate> » détermine une fonction qui, à des données de paramétrage du terminal utilisateur et/ou à des données de localisation et à un texte compris entre les deux balises, renvoie une traduction de ce texte dans la langue paramétrée ou dans la langue correspondant à la localisation.
- « <safecontent> » et « </safecontent> » détermine une fonction qui, à des données de paramétrage du terminal utilisateur et à un texte compris entre les deux balises, renvoie ce texte en supprimant ou en remplaçant les éléments de langage inappropriés.
- « < repetition/> » détermine une fonction qui, à des données relatives à l'historique de messages stockées sur la mémoire 1.24, renvoie une formule de politesse d'introduction qui dépend des messages précédemment échangé entre l'expéditeur et le destinataire, par exemple « Rebonjour » ou « Rebonsoir ».

Le résultat du décodage des balises <greet/> et <idt/>, ou alternativement de « Bonjour » et « Jean », du message 1.4 dans l'exemple de la figure 1, est « Good morning James » lorsque le décodage est effectué par le terminal utilisateur 1.21 en fonction des données du terminal stockées sur la mémoire 1.24. Ces résultats sont ainsi adaptés au destinataire A 1.20 du message 1.4, sans que l'expéditeur ait eu besoin de connaitre ces différents résultats. Par ailleurs, le résultat du décodage des balises <greet/> et <idt/>, ou alternativement de « Bonjour » et « Jean », du message 1.4 par le processeur du terminal utilisateur 1.31 en fonction des données du terminal stockées sur la mémoire de ce terminal (non représentée), est « Bonsoir Paul ». Ces résultats adaptés au destinataire B 1.30 du message 1.4 diffèrent de ceux calculés par le processeur du terminal utilisateur 1.21.

Aux étapes S5 et S5', les processeurs des terminaux utilisateur 1.21 et 1.31 (seul PROC 1.23 est représenté sur la figure 1) contrôlent respectivement leurs modules d'interface utilisateur (seul INT2 1.25 est représenté sur la figure 1) afin de pouvoir afficher les contenus finaux déterminés aux étapes S4 et S4'.

A l'étape S6, un message à émettre est déterminé. Ce message comprend notamment un contenu de message déterminé par le destinataire 1.20, le contenu initial de message déterminé par l'expéditeur 1.10 pour le message 1.4 et un contenu de remplacement. Ce contenu de remplacement peut être déterminé par le destinataire 1.20 ou par le processeur 1.23, par exemple en remplaçant le contenu spécifique par une chaine de caractère correspondant aux balises, par exemple « greet » et « idt » dans l'exemple de la figure 1. Le contenu du message à émettre peut également faire apparaître le contenu spécifique du message décodé par le processeur 1.23 en fonction d'un paramétrage décidé par le destinataire 1.20 ou suite à une validation effectuée par le destinataire, par exemple au moment de l'envoi du message ou lors d'une configuration d'une application ou d'un programme informatique utilisé pour l'émission/réception de messages. Le message à émettre peut être un accusé réception, le contenu spécifique pouvant également être remplacé ou non en fonction d'un paramétrage ou d'une validation réalisée par le destinataire.

A l'étape S7, le processeur 1.23 contrôle INT1 1.22 afin d'émettre le message déterminé à l'étape S6 et qui comprend notamment le contenu de remplacement. Ainsi, le destinataire de ce message émis n'aura pas le contenu spécifique qui est remplacé par le contenu de remplacement. Ainsi, il ne pourra pas en déduire les données du terminal utilisateur stockées dans la mémoire 1.24.

A l'étape S6', le processeur du terminal utilisateur 1.31 contrôle l'interface d'utilisateur du terminal utilisateur 1.31 afin que le destinataire 1.30 puisse évaluer le contenu obtenu par décodage de la balise ou des chaines de caractères. Par exemple, une fois le contenu final affiché sur l'interface d'utilisateur du terminal utilisateur 1.31, cette interface demande au destinataire 1.30 :
- de noter le contenu spécifique, par exemple, entre 1 et 5, ou
- de valider ou non le contenu spécifique, par exemple, « validez-vous le contenu ? », « oui », « non ».

Dans le cas où le destinataire 1.30 répond « non » ou donne une note faible, l'interface d'utilisateur peut proposer au destinataire 1.30 de choisir parmi des alternatives, par exemple, si le destinataire 1.30 ne valide pas « Bonsoir », l'interface lui propose « Bonjour » ou « Bon-weekend ». Alternativement, lorsque le destinataire 1.30 répond « non », l'interface d'utilisateur peut également afficher un champ de saisie afin que le destinataire 1.30 propose lui-même une alternative, le destinateur 1.30 peut alors saisir librement un mot, par exemple « Hello ».

Les étapes S7', S8' et S9' correspondent à la réception, le décodage et la restitution d'un deuxième message dont l'utilisateur 1.30 du terminal utilisateur 1.31 est destinataire. Ces étapes correspondent aux étapes S3', S4' et S5', mais avec autre message (à savoir le deuxième message) envoyé par le même ou un autre expéditeur.

A l'étape S7', le terminal utilisateur 1.31 reçoit via son module d'interface avec le réseau de communication électronique un deuxième message (non représenté). Ce deuxième message comprend également une donnée correspondant à une fonction.

A l'étape S8', le processeur du terminal utilisateur 1.31 décode le deuxième message et notamment le processeur décode la donnée correspondant à la fonction du deuxième message en fonction des données du terminal utilisateur 1.31, mais également en fonction du résultat de l'évaluation du contenu spécifique précédemment décodé. Par exemple, si le destinataire 1.30 du premier message ne valide pas « Bonsoir » et saisie « Hello », alors si le deuxième message comprend la donnée « <greet/> » correspondant à une fonction, le résultat du décodage de cette donnée correspondant à la fonction (à savoir, la détermination du résultat de la fonction appliquée sur les données du terminal utilisateur dont les résultats de l'évaluation font partie) par le terminal utilisateur 1.31 est alors « Hello » et non « Bonsoir ».

A l'étape S9', le processeur du terminal utilisateur 1.31 contrôle le module d'interface utilisateur afin d'afficher le deuxième contenu final déterminé à l'étape S8'.

Les étapes S6 et S7 concernent l'envoi d'un message en réponse au message 1.4 ou encore le transfert du message 1.4. Ces étapes peuvent être mises en oeuvre avec les étapes relatives à la validation du contenu spécifique (S6' à S9'), c'est-à-dire qu'une étape de validation similaire à celle de S6' peut être implémentée avant l'étape S6 ou encore après l'étape S7. La réception, le décodage et la restitution d'un deuxième message par le terminal utilisateur 1.21 se feront alors de manière similaire aux étapes S7' à S9'.

## Revendications

1. Une méthode de traitement d'un message reçu via un réseau de communication électronique par un terminal utilisateur, la méthode comprend :
une réception du message (S3, S3'), ledit message comprenant:
- des données correspondant à un contenu initial de message déterminé par l'expéditeur du message; et
- au moins une donnée correspondant à une fonction, l'au moins une donnée étant déterminée par l'expéditeur du message;
une détermination d'un contenu final (S5, S5'), ledit contenu final comprenant :
- le contenu initial de message déterminé par l'expéditeur du message; et
- un contenu spécifique obtenu par détermination d'un résultat de la fonction appliquée sur au moins des données présentes sur le terminal utilisateur.

2. La méthode selon la revendication 1 comprenant en outre la réception par un autre terminal utilisateur du message, dans laquelle un contenu obtenu par détermination d'un résultat de la fonction appliquée sur des données de l'autre terminal utilisateur diffère du contenu spécifique.

3. La méthode selon l'une des revendications précédentes dans laquelle le message est un courriel et l'au moins une donnée correspondant à la fonction est une balise.

4. La méthode selon l'une des revendications précédentes dans laquelle le contenu spécifique est obtenu en outre par détermination du résultat de la fonction appliquée sur des données correspondant au contenu initial de message déterminé par l'expéditeur du message.

5. La méthode selon l'une des revendications précédentes dans laquelle les données du terminal sont des paramètres propres à un utilisateur et/ou des messages précédemment reçus par le terminal utilisateur, et/ou une heure locale de la réception du message par le terminal utilisateur et/ou un état du terminal.

6. La méthode selon l'une des revendications précédentes dans laquelle les données du terminal sont au moins l'une parmi :
- des données d'un carnet d'adresses ;
- des données de disponibilité utilisateur ;
- des données d'un historique de messages ;
- des données d'une horloge ;
- des données d'un calendrier ;
- des données d'un profil utilisateur ;
- des données de paramétrage du terminal utilisateur ;
- des données de localisation ; et
- des données relatives à l'état du terminal utilisateur.

7. La méthode selon l'une des revendications précédentes comprend en outre la détermination d'un message à émettre comprenant :
- la détermination d'un contenu de message par un utilisateur du terminal utilisateur ;
- la détermination d'un contenu remplaçant le contenu spécifique.

8. La méthode selon la revendication 7 comprend en outre l'émission par le terminal utilisateur du message à émettre, ledit message à émettre comprenant :
- des données correspondant au contenu de message déterminé par l'utilisateur du terminal utilisateur ;
- des données correspondant au contenu de remplacement ;
- les données correspondant au contenu initial de message déterminé par l'expéditeur du message.

9. La méthode selon l'une des revendications précédentes comprend en outre une évaluation du contenu spécifique.

10. La méthode selon la revendication 9 comprenant en outre :
- la réception d'un deuxième message comprenant au moins la donnée correspondant à la fonction, et
- la détermination d'un deuxième contenu final comprenant un deuxième contenu spécifique obtenu par détermination d'un résultat de la fonction appliquée sur au moins les données du terminal et d'un résultat de l'évaluation du contenu spécifique.

11. Programme informatique comportant des instructions pour la mise en oeuvre le procédé selon l'une des revendications précédentes, lorsque ces instructions sont exécutées par un processeur.

12. Un terminal utilisateur configuré pour traiter un message reçu via un réseau de communication électronique (1.5), le terminal utilisateur comprend :
une interface réseau (1.22) configurée pour recevoir et envoyer des messages via le réseau de communication électronique ;
un processeur (1.23) ; et
une mémoire (1.24) stockant des instructions, de sorte que lorsque ces instructions sont exécutées par le processeur, elles configurent le terminal utilisateur pour:
- recevoir par l'interface réseau le message comprenant :
- des données correspondant à un contenu initial de message déterminé par l'expéditeur du message; et
- au moins une donnée correspondant à une fonction, l'au moins une donnée étant déterminée par l'expéditeur du message;
- déterminer un contenu final, ledit contenu final comprenant :
- le contenu initial de message déterminé par l'expéditeur du message; et
- un contenu spécifique obtenu par détermination d'un résultat de la fonction appliquée sur au moins des données présentes sur le terminal utilisateur.

## Patentansprüche

1. Verfahren zur Verarbeitung einer Nachricht, die über ein elektronisches Kommunikationsnetz von einem Benutzerendgerät empfangen wird, wobei das Verfahren umfasst:
ein Empfangen der Nachricht (S3, S3'), die Nachricht umfassend:
- Daten, die einem anfänglichen Nachrichteninhalt entsprechen, der von dem Absender der Nachricht bestimmt wird; und
- mindestens ein Datenelement, das einer Funktion entspricht, wobei das mindestens eine Datenelement von dem Absender der Nachricht bestimmt wird;
ein Bestimmen eines finalen Inhalts (S5, S5'), der finale Inhalt umfassend:
- den anfänglichen Nachrichteninhalt, der von dem Absender der Nachricht bestimmt wird; und
- einen spezifischen Inhalt, der durch Bestimmen eines Ergebnisses der Funktion erhalten wird, die mindestens auf Datenelemente angewandt wird, die sich auf dem Benutzerendgerät befinden.

2. Verfahren nach Anspruch 1, umfassend ferner das Empfangen der Nachricht durch ein anderes Benutzerendgerät, wobei ein Inhalt, der durch Bestimmen eines Ergebnisses der Funktion erhalten wird, die auf Daten des anderen Benutzerendgeräts angewandt wird, von dem spezifischen Inhalt abweicht.

3. Verfahren nach einem der vorhergehenden Ansprüche, wobei die Nachricht eine E-Mail ist und das mindestens eine Datenelement, das der Funktion entspricht, ein Tag ist.

4. Verfahren nach einem der vorhergehenden Ansprüche, wobei der spezifische Inhalt ferner durch Bestimmen des Ergebnisses der Funktion erhalten wird, die auf Daten angewandt wird, die dem anfänglichen Inhalt entsprechen, der von dem Absender der Nachricht bestimmt wird.

5. Verfahren nach einem der vorhergehenden Ansprüche, wobei die Daten des Endgeräts eigene Parameter eines Benutzers und/oder von dem Benutzerendgerät zuvor empfangene Nachrichten und/oder eine Ortszeit des Empfangs der Nachricht durch das Benutzerendgerät und/oder ein Status des Endgeräts sind.

6. Verfahren nach einem der vorhergehenden Ansprüche, wobei die Daten des Endgeräts mindestens eines sind unter:
- Daten eines Adressbuchs;
- Benutzerverfügbarkeitsdaten;
- Daten eines Nachrichtenverlaufs;
- Daten einer Uhr;
- Daten eines Kalenders;
- Daten eines Benutzerprofils;
- Parametrierungsdaten des Benutzerendgeräts;
- Lokalisierungsdaten; und
- Daten bezüglich des Status des Benutzerendgeräts.

7. Verfahren nach einem der vorhergehenden Ansprüche, umfassend ferner das Bestimmen einer zu sendenden Nachricht, umfassend:
- das Bestimmen eines Nachrichteninhalts durch einen Benutzer des Benutzerendgeräts;
- das Bestimmen eines Inhalts, der den spezifischen Inhalt ersetzt.

8. Verfahren nach Anspruch 7, umfassend ferner das Senden der zu sendenden Nachricht durch das Benutzerendgerät, die zu sendende Nachricht umfassend:
- Daten, die dem Nachrichteninhalt entsprechen, der von dem Benutzer des Benutzerendgeräts bestimmt wird;
- Daten, die dem Ersatzinhalt entsprechen;
- Daten, die dem anfänglichen Nachrichteninhalt entsprechen, der von dem Absender der Nachricht bestimmt wird.

9. Verfahren nach einem der vorhergehenden Ansprüche, umfassend ferner eine Bewertung des spezifischen Inhalts.

10. Verfahren nach Anspruch 9, umfassend ferner:
- das Empfangen einer zweiten Nachricht, umfassend mindestens das Datenelement, das der Funktion entspricht, und
- das Bestimmen eines zweiten finalen Inhalts, umfassend einen zweiten spezifischen Inhalt, der durch Bestimmen eines Ergebnisses der Funktion, die mindestens auf die Daten des Endgeräts angewandt wird, und eines Ergebnisses der Bewertung des spezifischen Inhalts erhalten wird.

11. Computerprogramm mit Anweisungen, die bei der Ausführung dieser Anweisungen durch einen Prozessor das Verfahren nach einem der vorhergehenden Ansprüche ausführen.

12. Benutzerendgerät, das dazu ausgestaltet ist, eine über ein elektronisches Kommunikationsnetz (1.5) empfangene Nachricht zu verarbeiten, wobei das Benutzerendgerät umfasst:
eine Netzschnittstelle (1.22), die dazu ausgestaltet ist, Nachrichten über das elektronische Kommunikationsnetz zu empfangen und zu senden;
einen Prozessor (1.23); und
einen Speicher (1.24), der Anweisungen speichert, so dass diese Anweisungen, wenn sie von dem Prozessor ausgeführt werden, das Benutzerendgerät dazu konfigurieren:
- von der Netzschnittstelle die Nachricht zu empfangen, umfassend:
- Daten, die einem anfänglichen Nachrichteninhalt entsprechen, der von dem Absender der Nachricht bestimmt wird; und
- mindestens ein Datenelement, das einer Funktion entspricht, wobei das mindestens eine Datenelement von dem Absender der Nachricht bestimmt wird;
- einen finalen Inhalt zu bestimmen, der finale Inhalt umfassend:
- den anfänglichen Nachrichteninhalt, der von dem Absender der Nachricht bestimmt wird; und
- einen spezifischen Inhalt, der durch Bestimmen eines Ergebnisses der Funktion erhalten wird, die mindestens auf Datenelemente angewandt wird, die sich auf dem Benutzerendgerät befinden.

## Claims

1. Method for processing a message received via an electronic communication network by a user terminal, the method comprising:
receiving the message (S3, S3'), said message comprising:
- data corresponding to initial message content determined by the sender of the message; and
- at least one datum corresponding to a function, the at least one datum being determined by the sender of the message;
determining final content (S5, S5'), said final content comprising:
- the initial message content determined by the sender of the message; and
- specific content obtained by determining a result of the function applied to at least data present on the user terminal.

2. Method according to Claim 1, furthermore comprising another user terminal receiving the message, wherein content obtained by determining a result of the function applied to data of the other user terminal differs from the specific content.

3. Method according to either of the preceding claims, wherein the message is an email and the at least one datum corresponding to the function is a tag.

4. Method according to one of the preceding claims, wherein the specific content is furthermore obtained by determining the result of the function applied to data corresponding to the initial message content determined by the sender of the message.

5. Method according to one of the preceding claims, wherein the data of the terminal are parameters specific to a user and/or messages received previously by the user terminal, and/or a local time of receipt of the message by the user terminal and/or a status of the terminal.

6. Method according to one of the preceding claims, wherein the data of the terminal are at least one of the following:
- data from an address book;
- user availability data;
- data from a message history;
- data from a clock;
- data from a calendar;
- data from a user profile;
- parameterization data of the user terminal;
- location data; and
- data relating to the status of the user terminal.

7. Method according to one of the preceding claims, furthermore comprising determining a message to be transmitted, comprising:
- a user of the user terminal determining message content;
- determining content that replaces the specific content.

8. Method according to Claim 7, furthermore comprising the user terminal transmitting the message to be transmitted, said message to be transmitted comprising:
- data corresponding to the message content determined by the user of the user terminal;
- data corresponding to the replacement content;
- the data corresponding to the initial message content determined by the sender of the message.

9. Method according to one of the preceding claims, furthermore comprising evaluating the specific content.

10. Method according to Claim 9, furthermore comprising:
- receiving a second message comprising at least the datum corresponding to the function, and
- determining second final content comprising second specific content obtained by determining a result of the function applied to at least the data of the terminal and a result of the evaluation of the specific content.

11. Computer program comprising instructions for implementing the method according to one of the preceding claims when these instructions are executed by a processor.

12. User terminal configured to process a message received via an electronic communication network (1.5), the user terminal comprising:
a network interface (1.22) configured to receive and send messages via the electronic communication network;
a processor (1.23); and
a memory (1.24) storing instructions, such that, when these instructions are executed by the processor, they configure the user terminal to:
- receive, via the network interface, the message comprising:
- data corresponding to initial message content determined by the sender of the message; and
- at least one datum corresponding to a function, the at least one datum being determined by the sender of the message;
- determine final content, said final content comprising:
- the initial message content determined by the sender of the message; and
- specific content obtained by determining a result of the function applied to at least data present on the user terminal.
